# EUROPÄISCHE PATENTANMELDUNG

(11) **EP 1 106 648 A1**
(43) Veröffentlichungstag der Anmeldung: **13.06.2001**
(21) Anmeldenummer: 00126932.3
(22) Anmeldetag: 08.12.2000
(51) Int. Cl.: C08L 23/12, C08L 23/08, C08L 83/04, C08K 3/22, C08K 5/098, C08K 13/02, C08L 23/14

(54) **Flammwidrige Zusammensetzung**

(30) Priorität: 08.12.1999 DE 19959110
(71) Anmelder: REHAU AG + Co, 95111 Rehau (DE)
(72) Erfinder: Goller, Rainer, Dr., 95111 Rehau (DE); Süss, Michael, 95111 Rehau (DE); Paul, Heinz, 46414 Rhede (DE)

(57) **Zusammenfassung**

Die vorliegende Erfindung betrifft eine flammwidrige, halogenfreie Zusammensetzung auf Basis eines Polymers aus Propylen, die zur Herstellung elektrischer und/oder optischer Kabel und Leitungen ermöglicht, die eine ausreichende Abriebfestigkeit und ausreichende elektrische Eigenschaften bei Wasserlagerung verfügen, die selbstverlöschend sind und die eine problemlose Verarbeitbarkeit sowie unbegrenzte Einfärbbarkeit gewährleisten.
Die Lösung dieser Aufgabe ist eine flammwidrige, halogenfreie Zusammensetzung, geeignet zur Herstellung elektrischer und/oder optischer Kabel und Leitungen, umfassend die Komponente (A) 100 Gewichtsteile eines Polymers auf Basis von Polypropylen, Kompenente (B) 0 bis 20 Gewichtsteile eines Copolymers aus Ethylen und einem α-Olefin mit mehr als zwei Kohlenstoffatomen, Komponente (C) 50 bis 140 Gewichtsteile Magnesium-Hydroxid und Komponente (D) 2 bis 20 Gewichtsteile eines Polyorganosiloxans.

## Beschreibung

Die vorliegende Erfindung betrifft eine flammwidrige, halogenfreie Zusammensetzung auf Basis eines Polymers aus Propylen, die zur Herstellung elektrischer und/oder optischer Kabel und Leitungen geeignet ist.

Flammwidrige Zusammensetzungen auf der Basis von Polyolefinen sind bereits bekannt. Beispielsweise ist in der US-A-4,273,691 eine flammwidrige Zusammensetzung beschrieben, die 70 bis 98% Polyolefin, das Polypropylen sein kann, 1 bis 10% Silicon und 1 bis 20% eines Gruppe IIA Metallsalzes einer Carbonsäure mit 6 bis 20 Kohlenstoffatomen, wie Magnesiumstearat, enthält.

In der US-A-5,889,087 ist ein Kabel mit einem oder mehreren elektrischen Leitern oder Kommunikationsmedien beschrieben, das von einer Zusammensetzung umgeben ist, die ein Ethylen/α-Olefincopolymer, ein modifiziertes Ethylenharz, ein anorganisches Flammschutzmittel und Siliconöl enthält.

Die US-A-5,091,453 beschreibt eine flammwidrige Polymerzusammensetzung, die im wesentlichen frei von Halogenverbindungen und organischen Metallsalzen ist, wobei diese Zusammensetzung ein organisches Polymer mit mindestens 40 Gew.-% eines Copolymers aus Ethylen, ein Siliconöl oder -kautschuk und ein anorganisches Füllmittel enthält. Das anorganische Füllmittel ist weder ein Hydroxid noch eine im wesentlichen hydrierte Verbindung.

Allerdings zeigen die herkömmlichen Kabel keine ausreichende Abriebfestigkeit und elektrische Eigenschaften bei Wasserlagerung. Außerdem ist die Selbstverlöschung, insbesondere bei waagrechter Verlegung, ungenügend. Ein weiteres Erfordernis an Polymerzusammensetzungen für die Herstellung elektrischer und/oder optischer Kabel und Leitungen ist deren problemlose Verarbeitbarkeit sowie die unbegrenzte Einfärbbarkeit.

Der Erfindung liegt deshalb die Aufgabe zugrunde, eine Zusammensetzung zur Verfügung zu stellen, die zur Herstellung elektrischer und/oder optischer Kabel und Leitungen geeignet ist, und die vorstehend genannten Probleme überwindet.
Die Lösung dieser Aufgabe ist eine flammwidrige, halogenfreie Zusammensetzung, geeignet zur Herstellung elektrischer und/oder optischer Kabel und Leitungen, umfassend
(A) 100 Gewichtsteile eines Polymers auf Basis von Propylen,
(B) 0 bis 20 Gewichtsteile eines Copolymers aus Ethylen und einem α-Olefin mit mehr als 2 Kohlenstoffatomen,
(C) 50 bis 140 Gewichtsteile Magnesiumhydroxid, und
(D) 2 bis 20 Gewichtsteile eines Polyorganosiloxans.

"Halogenfrei" im Sinne dieser Erfindung bedeutet "im wesentlichen halogenfrei", d.h. daß die Zusammensetzung keine über Verunreinigungen hinausgehende Mengen an Halogenatomen enthält.

Das Polymer auf Basis von Propylen (A) kann ein Polypropylen-Homopolymer oder ein Pölypropylen-Copolymer, wie ein Polypropylen-Block-Copolymer oder Polypropylen-Random-Copolymer mit Ethylen, sein. Der Gehalt an verwendetem Comonomer in dem Polymer auf Basis von Propylen ist vorzugsweise im Bereich von etwa 2 bis etwa 20 Gew.-%, bezogen auf das Gesamtgewicht des Polymers. Wenn Komponente (A) ein Copolymer umfaßt, kann das neben Propylen verwendete Monomer ein Olefin mit 2 bis 10 Kohlenstoffatomen sein. Der Schmelzindex der Polymere auf Basis von Propylen (A) ist vorzugsweise 0,8 - 5 g/10 min (ISO 1133).

Das Copolymer aus Ethylen und einem α-Olefin mit mehr als 2 Kohlenstoffatomen (B) kann ein VLDPE (very low density polyethylene) oder ein ULDPE (ultra low density polyethylene) sein. Das α-Olefin mit mehr als 2 Kohlenstoffatomen ist vorzugsweise Propylen, 1-Buten, 1-Penten, 1-Hexen, 4-Methyl-1-Penten, 1-Hepten, 1-Octen, 1-Decen, 1-Dodecen oder Norbornen.

Das Polyorganosiloxan (D) kann ein Siliconöl oder ein Siliconkautschuk sein. Das erfindungsgemäß verwendbare Siliconöl kann durch die allgemeine Formel R₃Si-O-(R₂SiO)ₙ-R₂Si-O-R dargestellt werden, wobei jeder der Reste R unabhängig voneinander ein gesättigter oder ungesättigter Alkyl-, Arylrest oder ein Wasserstoffatom ist und der Index n vorzugsweise 1 bis 5.000 ist. Vorzugsweise sind die Reste R Methyl-, Ethyl-, n-Propyl-, Isopropyl-, n-Butyl-, Isobutyl-, Phenyl- oder Vinylreste.

Die Viskosität des Siliconöls kann im Bereich von etwa 0,65 bis etwa 1 Mill. Centistoke bei 25°C, vorzugsweise im Bereich von 5.000 bis etwa 200.000 Centistoke und insbesondere im Bereich von etwa 10.000 bis etwa 100.000 Centistoke liegen. Die Siliconkautschuke sind in den gummielastischen Zustand überführbare Massen, die als Grundpolymere Polydiorganosiloxane enthalten und zusätzlich Vernetzungsreaktionen zugängliche Reste aufweisen. Solche Reste können vorzugsweise Wasserstoffatome, OH-und Vinylgruppen sein.

Die erfindungsgemäße Zusammensetzung enthält 100 Gewichtsteile eines Polymers auf Basis von Propylen (A). Weiterhin enthält sie 0 bis 20 Gewichtsteile eines Copolymers aus Ethylen und einem α-Olefin mit mehr als 2 Kohlenstoffatomen (B), vorzugsweise 5 bis 15 Gewichtsteile und insbesondere 10 Gewichtsteile. Außerdem enthält sie 50 bis 140 Gewichtsteile Magnesiumhydroxid (C), vorzugsweise 70 bis 140 und insbesondere 80 bis 100 Gewichtsteile. Außerdem enthält sie 2 bis 20 Gewichtsteile eines Polyorganosiloxans (D), vorzugsweise 8 bis 15 Gewichtsteile und insbesondere 10 Gewichtsteile.

Gemäß einer Ausführungsform der vorliegenden Erfindung kann die erfindungsgemäße Zusammensetzung zusätzlich ein Metallsalz einer Carbonsäure umfassen. Die Carbonsäure hat vorzugsweise 6 bis 20, bevorzugter 8 bis 20 und insbesondere 15 bis 20 Kohlenstoffatome. Eine besonders bevorzugte Carbonsäure ist Stearinsäure. Das Metall ist vorzugsweise ausgewählt aus der Gruppe IIA des Periodensystems und bevorzugter aus der Gruppe Mg, Ca, Sr und Ba, und ist insbesondere Mg. Insbesondere kann das Metallsalz einer Carbonsäure Magnesiumstearat sein.

Die erfindungsgemäße Zusammensetzung enthält vorzugsweise 1 bis 15 Gewichtsteile, bevorzugter 2 bis 8 Gewichtsteile und insbesondere 5 Gewichtsteile eines Metallsalzes einer Carbonsäure.

Außerdem können der erfindungsgemäßen Zusammensetzung herkömmliche Additive zugesetzt werden, mit der Maßgabe, daß diese keine negativen Auswirkungen auf die Eigenschaften der Zusammensetzung haben. Die Additive können der Harzzusammensetzung vor oder während des Mischens der Komponenten zugesetzt werden.

Die Additive umfassen Antioxidationsmittel, Ultraviolettabsorber oder -stabilisatoren, Antistatikmittel, Pigmente, Farben, Metalldesaktivatoren und Füllmittel. Vorzugsweise enthält die erfindungsgemäße Zusammensetzung 0,1 bis 1, insbesondere 0,3 bis 0,5 Gewichtsteile des Additivs.

Die erfindungsgemäßen Zusammensetzungen können in an sich bekannter Weise durch Mischen der einzelnen Komponenten erhalten werden. Die Zusammensetzung kann vorzugsweise unter Verwendung eines Einschneckencokneters oder Zweischneckenkneters erhalten werden. Zur Herstellung der elektrischen- und/oder optischen Kabel und Leitungen, die die erfindungsgemäße Zusammensetzung umfassen, können Extrusionsverfahren verwendet werden. Insbesondere kann die erfindungsgemäße Zusammensetzung gemischt werden und sodann das Kabel mit der mit verschiedenen Arten von Extrudern hergestellten Zusammensetzung beschichtet werden.

Die erfindungsgemäße Zusammensetzung ist flammwidrig bzw. flammfest. Der Sauerstoffindex der erfindungsgemäßen Zusammensetzung, der ein Maß für die Flammwidrigkeit der jeweiligen Zusammensetzung ist, ist wesentlich erhöht. Der Sauerstoffindex von Polypropylen ohne Zusätze ist ca. 17 - 18% desjenigen der erfindungsgemäßen Zusammensetzung. Der Sauerstoffindex wird bestimmt durch die ISO 4589. Bei Verwendung der erfindungsgemäßen Zusammensetzung bei der Herstellung elektrischer und/oder optischer Kabel und Leitungen findet kein Abtropfen des Isoliermaterials, wie des Kabelmantels, im Brandfall statt. Darüber hinaus bietet die erfindungsgemäße Zusammensetzung gute mechanische und elektrische Eigenschaften, sogar bei Wasserkontakt. Weiterhin ist der Abrieb des Kabelmantels bei Verwendung der erfindungsgemäßen Zusammensetzung wesentlich verbessert. Außerdem ist die erfindungsgemäße Zusammensetzung kostengünstig herstellbar, und die Komponenten der Zusammensetzung können problemlos der Wiederverwertung zugeführt werden.

Wird auf die Flexibilität des Kabels, das mit der erfindungsgemäßen Zusammensetzung beschichtet ist, bei gleichzeitiger Flammwidrigkeit besonderen Wert gelegt, wird der erfindungsgemäßen Zusammensetzung vorzugsweise ein Copolymer von Ethylen (Komponente (B)) einverleibt.

Der Querschnitt der mit der erfindungsgemäßen Zusammensetzung beschichteten Kabel beträgt vorzugsweise 0,35 bis 6 mm². Wenn der Querschnitt des Kabels > 2,5 mm² ist, dann enthält die erfindungsgemäße Zusammensetzung vorzugsweise 1 bis 20, insbesondere 5 Gewichtsteile des Copolymers aus Ethylen und einem α-Olefin mit mehr als 2 Kohlenstoffatomen. Wenn Kabel mit einem Querschnitt von < 2,5 mm² mit der erfindungsgemäßen Zusammensetzung beschichtet werden, enthält die erfindungsgemäße Zusammensetzung vorzugsweise kein Copolymer aus Ethylen und einem α-Olefin mit mehr als 2 Kohlenstoffatomen.

In den nachstehenden Beispielen wird die vorliegende Erfindung verdeutlicht.

### Beispiel 1

Eine Zusammensetzung aus 46,5 Gewichtsteilen Polypropylen-Copolymer, das ca. 90% Propylen und 10% Ethylen enthält, 5 Gewichtsteilen Copolymer des Ethylens mit ca. 25% Octengehalt, 42,75 Gewichtsteilen Magnesiumhydroxid, 5,75 Gewichtsteilen Dimethyl-Siloxan-Polymer (30.000 centistoke), 0,3 Gewichtsteilen Thiodipropionsäuredilaurylester, 0,15 Gewichtsteilen sterisch gehindertes Phenol und 0,15 Phosphit, 0,3 N,N-Bis[3-(3,5-ditertiär-butyl-4-hydroxyphenyl)-propionyl]hydrazin wurde hergestellt. Dazu wurden zunächst Dimethyl-Siloxan-Polymer und die Additive in einem Schnellmischer ca. 5 min. ohne weitere Temperaturbeeinflussung zu einem Mastermix verarbeitet. Anschließend wurden das PP-Copolymer, Copolymer des Ethylens, Magnesiumhydroxid und Mastermix getrennt über Dosierwaagen in einen Zweischneckenkneter zudosiert und compoundiert.

Die mechanischen Eigenschaften der in Beispiel 1 hergestellten Zusammensetzung sind in Tabelle 1 enthalten.

**Tabelle 1**

| | | | |
|---|---|---|---|
| Zugfestigkeit | ISO 527-2 | 15 | N/mm² |
| Reißdehnung | ISO 527-2 | 250 | % |
| Schlagzähigkeit | ISO 179 | ohne Bruch | KJ/m² |
| Kerbschlagzähigkeit | ISO 179 | 2 | KJ/m² |
| Sauerstoffindex | ISO 4589 | 30 | % |

### Beispiel 2

Mit der in Beispiel 1 hergestellten Zusammensetzung wurden mittels eines Extrusionsprozesses mehrere Kabel beschichtet, die einen Querschnitt von 2,5 bis 6 mm² hatten. Die in Beispiel 1 hergestellte Zusammensetzung erfüllt die Anforderungen nach ISO 6722 bei Kabeln mit einem Querschnitt > 2,5 mm².

### Beispiel 3

Eine Zusammensetzung aus 45 Gewichtsteilen Polypropylen-Copolymer, das ca. 90% Propylen und 10% Ethylen enthält, 50 Gewichtsteilen Magnesiumhydroxid, 5 Gewichtsteilen Siliconkautschuk (Siliconmasse), 2,5 Gewichtsteilen Magnesiumstearat, 0,7 Gewichtsteilen Benzolpropansäure und 0,4 Gewichtsteilen 3,5-bis(1,1-dimethylethyl)-4-4-hydroxy-2,2-bis(3-(3,5-bis(1,1-dimethylethyl)-1,3-propandylester (9CI) wurde hergestellt. Aus Siliconkautschuk, Magnesiumstearat und Additiven wurde in einem Schnellmischer innerhalb ca. 5 min. ohne weitere Temperaturbeeinflussung ein Mastermix hergestellt. Anschließend wurden das PP-Copolymer, Copolymer des Ethylens, Magnesiumhydroxid und Mastermix getrennt über Dosierwaagen in einen Einschneckencokneter zudosiert und compoundiert.

Die mechanischen Eigenschaften der hergestellten Zusammensetzung sind in Tabelle 2 gezeigt.

**Tabelle 2**

| | | | |
|---|---|---|---|
| Zugfestigkeit | ISO 527-2 | 13 | N/mm² |
| Reißdehnung | ISO 527-2 | 250 | % |
| Schlagzähigkeit | ISO 179 | ohne Bruch | KJ/m² |
| Kerbschlagzähigkeit | ISO 179 | ohne Bruch | KJ/m² |
| Sauerstoffindex | ISO 4589 | 30 | % |

### Beispiel 4

Mit der in Beispiel 3 hergestellten Zusammensetzung wurden mittels eines Extruders mehrere Kabel beschichtet, die einen Querschnitt von 0,35 bis 2,5 mm² hatten. Die in Beispiel 3 hergestellte Zusammensetzung erfüllt die Anforderungen nach ISO 6722 bei Kabeln mit einem Querschnitt < 2,5 mm².

Wie aus den Beispielen ersichtlich, zeigen die erfindungsgemäßen Zusammensetzungen gute mechanische Eigenschaften.

## Patentansprüche

1. Flammwidrige, halogenfreie Zusammensetzung, geeignet zur Herstellung elektrischer und/oder optischer Kabel und Leitungen, umfassend
(A) 100 Gewichtsteile eines Polymers auf Basis von Propylen,
(B) 0 bis 20 Gewichtsteile eines Copolymers aus Ethylen und einem α-Olefin mit mehr als 2 Kohlenstoffatomen,
(C) 50 bis 140 Gewichtsteile Magnesiumhydroxid, und
(D) 2 bis 20 Gewichtsteile eines Polyorganosiloxans.

2. Zusammensetzung nach Anspruch 1, welche zusätzlich 1 bis 15 Gewichtsteile eines Metallsalzes einer Carbonsäure umfaßt.

3. Zusammensetzung nach Anspruch 1 oder 2, wobei Komponente (A) ein Polypropylen-Homopolymer ist.

4. Zusammensetzung nach Anspruch 1 oder 2, wobei Komponente (A) ein Polypropylen-Block-Copolymer ist.

5. Zusammensetzung nach Anspruch 1 oder 2, wobei Komponente (A) ein Polypropylen-Random-Copolymer ist.

6. Zusammensetzung nach einem der vorstehenden Ansprüche, enthaltend 5 bis 15 Gew.-% Komponente (B).

7. Zusammensetzung nach einem der vorstehenden Ansprüche, wobei das α-Olefin mit mehr als 2 Kohlenstoffatomen in Komponente (B) ausgewählt ist aus der Gruppe, bestehend aus Propylen, 1-Buten, 1-Hexen und 1-Octen.

8. Zusammensetzung nach einem der Ansprüche 2 bis 7, wobei das Metallsalz einer Carbonsäure ein Gruppe IIA Metallsalz einer Carbonsäure mit 6 bis 20 Kohlenstoffatomen ist.

9. Zusammensetzung nach Anspruch 8, wobei das Metallsalz einer Carbonsäure Magnesiumstearat ist.

10. Verwendung einer Zusammensetzung nach einem der Ansprüche 1 bis 9 zur Herstellung elektrischer und/oder optischer Kabel und Leitungen.

11. Kabel, umfassend eine Zusammensetzung nach einem der Ansprüche 1 bis 9.
